(19) Europäisches Patentamt

European Patent Office

Office européen des brevets

(11) **EP 0 729 279 B1**

(12) **FASCICULE DE BREVET EUROPEEN**

(45) Date de publication et mention
de la délivrance du brevet:
**16.08.2001   Bulletin 2001/33**

(51) Int Cl.⁷: **H04N 9/31**

(21) Numéro de dépôt: **96400395.8**

(22) Date de dépôt: **26.02.1996**

(54) **Système de projection couleur monovalve**

Monolichtventil-Farbprojektionsysteme

Monovalve projection color system

(84) Etats contractants désignés:
**DE FR GB IT**

(30) Priorité:  **27.02.1995  FR 9502230**

(43) Date de publication de la demande:
**28.08.1996   Bulletin 1996/35**

(73) Titulaire: **THOMSON multimedia**
**92648 Boulogne Cédex (FR)**

(72) Inventeurs:
• **Sarayeddine, Khaled**
**92050 Paris La Défense Cedex (FR)**
• **Borel, Thierry**
**92050 Paris La Défense Cedex (FR)**

(74) Mandataire: **Ruellan-Lemonnier, Brigitte et al**
**THOMSON multimedia,**
**46 quai A. Le Gallo**
**92648 Boulogne Cédex (FR)**

(56) Documents cités:
**EP-A- 0 601 666          WO-A-94/28672**

• **PATENT ABSTRACTS OF JAPAN vol. 18, no. 194
(P-1722), 5 Avril 1994 & JP-A-06 003639 (SHARP
CORP), 14 Janvier 1994,**
• **PATENT ABSTRACTS OF JAPAN vol. 13, no. 503
(E-844), 13 Novembre 1989 & JP-A-01 200795
(TOPCON CORP), 11 Août 1989,**

**Description**

La présente invention concerne un système de projection couleur monovalve performant car permettant l'affichage séquentiel de couleurs, et simple à mettre en oeuvre, ainsi qu'un procédé d'adressage d'un tel système.

Un système de projection au travers d'un LCD est constitué en général d'une lampe à arc du type halogénure métallique ou Xénon positionnée au foyer d'un réflecteur parabolique ou elliptique muni d'un condenseur. La lumière blanche émise par la lampe se reflète dans le réflecteur et est transmise au travers d'une lentille de champs vers un écran à cristaux liquides, ou modulateur electro-optique fonctionnant en valve optique. En général ces modulateurs sont à structure en couches minces (TFT pour "Thin Film Transistor" en langue Anglaise), chaque pixel est commandé par un transistor TFT et adressé par des circuits périphériques ("drivers" en langue Anglaise), le cristal liquide est du type "nématique twisté" et travaille avec une lumière polarisée linéairement. L'image est transmise au travers de l'écran à cristaux liquides et est ensuite affichée sur un écran grâce à un système de lentilles.

Dans le cas d'un système monovalve couleur, l'écran à cristaux liquides comporte pour chaque point image trois pixels rouge (R), vert (V) et bleu (B) et a donc une définition trois fois moins bonne qu'un système trivalve (un écran pour chaque couleur) dans lequel les images R, V et B sont superposées. De plus, les systèmes usuels monovalve utilisent les filtres colorés absorbants pour former les pixels colorés R, V et B. Chaque pixel est constitué d'un filtre qui absorbe les couleurs complémentaires. Ceci induit une perte du 2/3 de flux de la lumière incidente sur la valve optique. Ces deux points (faibles résolution et flux) sont les désavantages majeurs du système monovalve actuellement. D'autres solutions proposent de travailler avec une résolution triple en séquençant les couleurs, le problème étant que le temps de réponse des écrans à cristaux liquides à matrice active n'est actuellement pas suffisant pour afficher les trois couleurs de manière séquentielle. Cependant, il existe des solutions pour améliorer le temps de réponse en utilisant des cellules ferroélectriques ou d'autres structures à cristaux liquides.

Dans le cas de tels systèmes couleurs monovalves, il existe plusieurs solutions permettant l'affichage séquentiel des couleurs sur l'écran. La première consiste à séquencer les couleurs grâce à une roue constituée d'un certain nombre de segments de filtres absorbants R, V et B passant et couvrant le LCD pendant une sous-trame, lorsque la roue tourne, devant la valve optique. Cette solution est décrite en détail dans l'article de DOBLER et al "An Improved Frame-Sequential Color Projector with Modified CdSe-TFTs" (SID 91 Digest page 427). L'inconvénient principal de cette méthode est la perte du 2/3 de la lumière incidente. De plus, afin d'éviter la désaturation des couleurs et le trainage dû à la vitesse de réponse non suffisante du cristal liquide, il est nécessaire d'intercaler des zones opaques entre les filtres. Cela conduit à une forte diminution de l'efficacité de la lumière qui est un problème crucial pour les systèmes de projection. Cette méthode, induit aussi un autre problème. En effet, si l'on séquence les sous trames R, V et B, le phénomène de saccade de l'oeil ("Break Up" en langue Anglaise) apparait: lorsque l'oeil du spectateur bouge devant l'écran, celui-ci voit les couleurs sur le bord des objets qui y sont affichés. Cela provient du fait que la position de l'image dans l'oeil n'est pas la même pour chaque couleur.

Une autre solution consiste à diviser la lumière de la lampe en trois faisceaux de couleur grâce à un système de miroirs dichroïques et d'intercaler entre ce système et la lentille de champ devant la valve optique, un prisme en rotation permettant le séquencement des faisceaux sur l'écran. Cette solution est largement décrite dans l'article "A Novel Single Valve Hight Brightness HD Color Projector" de P. Janssen (Philips). Le problème est que cette solution est difficile à mettre en oeuvre à cause de la rotation d'un prisme (lourd) et, de plus, la déflection des faisceaux de couleur n'est pas uniforme du fait de la relation de réfraction $n1\sin\theta1 = n2\sin\theta2$ qui n'est pas linéaire pour des grandes valeurs d'angles d'incidence, ce qui induit une désaturation des couleurs dans les zones de balayage séparant les trois bandes colorées.

La présente invention permet de résoudre les problèmes posés par les solutions de l'art antérieur et propose un système simple, fiable et performant reposant sur la déflection du faisceau par une plaque de verre. En effet, la présente invention consiste à intercaler entre la valve optique et l'objectif plusieurs plaques de verre en rotation de manière séquentielle. Ces plaques de verre permettent un décalage spatial de l'image des pixels de la valve trois fois par trame sur l'écran de projection.

Plus précisément, la présente invention concerne un système de projection couleur monovalve comportant un dispositif d'éclairement illuminant une valve optique couleur commandée par un dispositif d'adressage et constituée de pixels dont l'image est affichée via un objectif sur un écran de projection comportant en plus, entre la valve optique et l'objectif, au moins un jeu de trois plaques de verre, caractérisé en ce que les plaques de verre sont positionnées les unes par rapport aux autres, de manière à décaler spatialement l'image dans le plan image sur l'écran de projection.

Ce ou ces jeux de trois plaques sont en rotation et coupent le faisceau image à chaque trame d'image.

Dans un même jeu, les plaques sont inclinées par rapport à la valve optique, de manière à ce qu'une même image soit décalée sur l'écran de projection d'une distance d égale à la distance entre les centres géométriques des pixels adjacents colorés de la valve optique.

Une des plaques d'un des jeux peut être parallèle à la valve optique, et les deux autres inclinées d'un même angle positif et négatif +/-φ par rapport à cette première plaque.

Toutes les plaques ont la même épaisseur e, et, dans un même jeu, l'angle d'inclinaison des plaques par rapport à celle qui est parallèle à la valve optique est relié à cette épaisseur par la relation suivante :

$$d = e. (Sin(\theta2-\theta1)/Cos(\theta2)),$$

d étant la distance entre deux pixels adjacents, e étant l'épaisseur de la plaque de verre, θ1 et θ2 étant respectivement les angles incidents air-plaque et plaque-air des plaques inclinées. La relation entre θ1 et θ2 est donnée par la relation de réfraction simple n1.sinθ1 = n2.sinθ2, où n1 et n2 sont respectivement l'indice de refraction de l'air n1 = 1 et du verre n2.

Toutes les plaques sont fixées à leurs bases à un moteur dont l'axe est parallèle à l'axe optique du système.

La fréquence du moteur est synchrone par rapport à la fréquence ligne et trame de la valve ainsi que par rapport au multiplexeur du dispositif d'adressage.

De préférence, chaque plaque comporte une zone opaque le long du rayon du moteur afin de permettre la commutation de la valve optique lorsque cela est nécessaire.

La valve optique utilisée dans le système est de préférence un écran à cristaux liquides dont la structure de pixels est en delta, en lignes ou en colonnes.

La présente invention concerne aussi un premier mode d'adressage de tels systèmes de projection qui est caractérisé en ce qu'est prévue une mémoire pour chacune des trois couleurs rouge, vert et bleu, ayant autant d'adresses qu'il y a de pixels sur la valve, le pointeur d'un bus d'adressage commun étant synchronisé avec un multiplexeur de manière à ce que soit affichées des séries de sous-trames dans lesquelles un pixel rouge, vert ou bleu à t-1, devient respectivement bleu, rouge et vert à t, et vert, bleu et rouge à t+1.

La présente invention concerne aussi un second mode d'adressage de tels systèmes de projection qui est caractérisé en ce qu'il est prévue une mémoire pour chacune des trois couleurs rouge, vert et bleu, ayant autant d'adresses qu'il y a de pixels sur la valve, chacune des sorties des trois mémoires étant passante alternativement à chaque coup d'horloge.

Le système selon l'invention est complètement indépendant de la manière d'obtenir les couleurs sur chaque pixel et peut être utilisé avec des filtres de couleurs absorbants ou d'interférence réalisés directement sur l'écran à cristaux liquides ou avec tout autre méthode engendrant des pixels colorés (par l'illumination par exemple). De plus, ce système permet d'obtenir par exemple un pixel blanc à partir de trois pixels R, V et B quelque soit la position de ces pixels colorés dans le LCD. En effet il suffit de choisir le barycentre de trois triplets R, V et B et de calculer ainsi l'angle qu'il faut à chaque plaque pour devier le pixel coloré correspondant afin de tomber sur ce barycentre. D'autre part, il y a toujours trois couleurs par sous-trame ce qui permet d'éviter les phénomènes gênants de saccade de l'oeil (Break Up) par rapport aux solutions préconisées par l'art antérieur. Un autre avantage est que le multiplexage semble être beaucoup plus simple pour l'électronique d'adressage et les éléments optiques.

La présente invention sera mieux comprise et des avantages supplémentaires apparaitront à la lecture de la description qui va suivre illustrée par les figures suivantes:

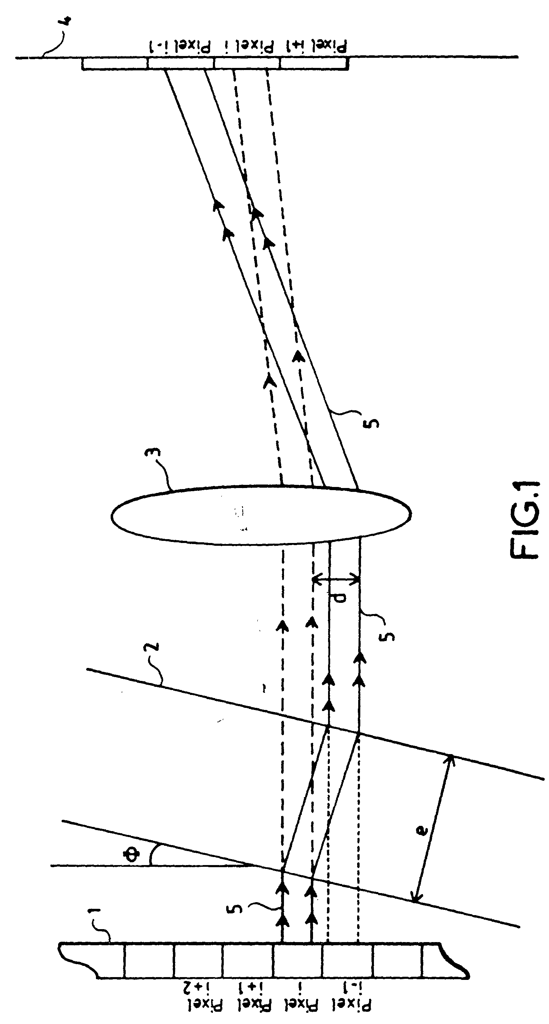

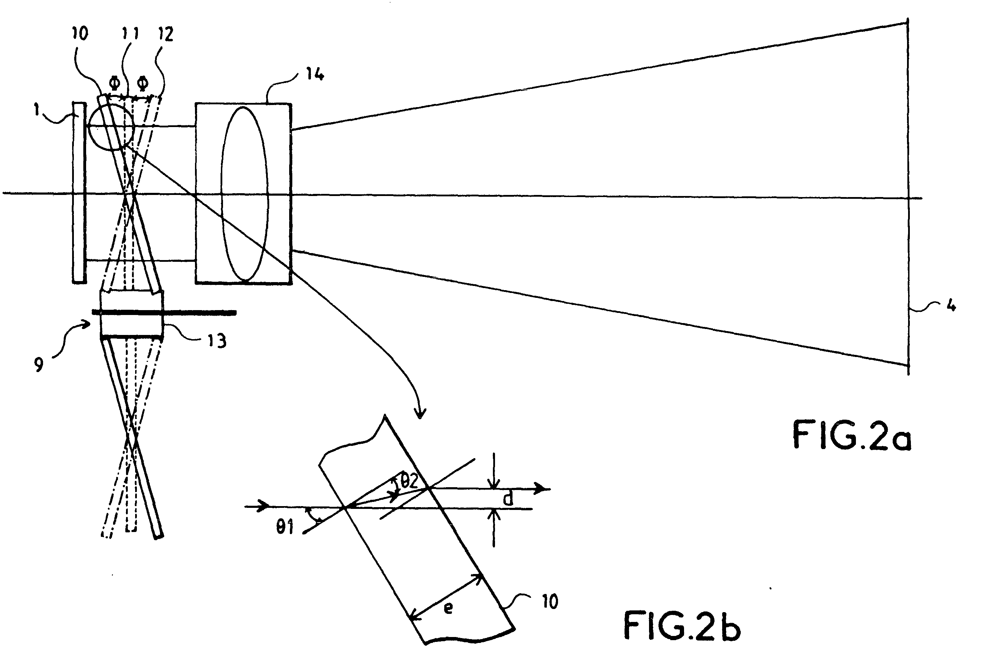

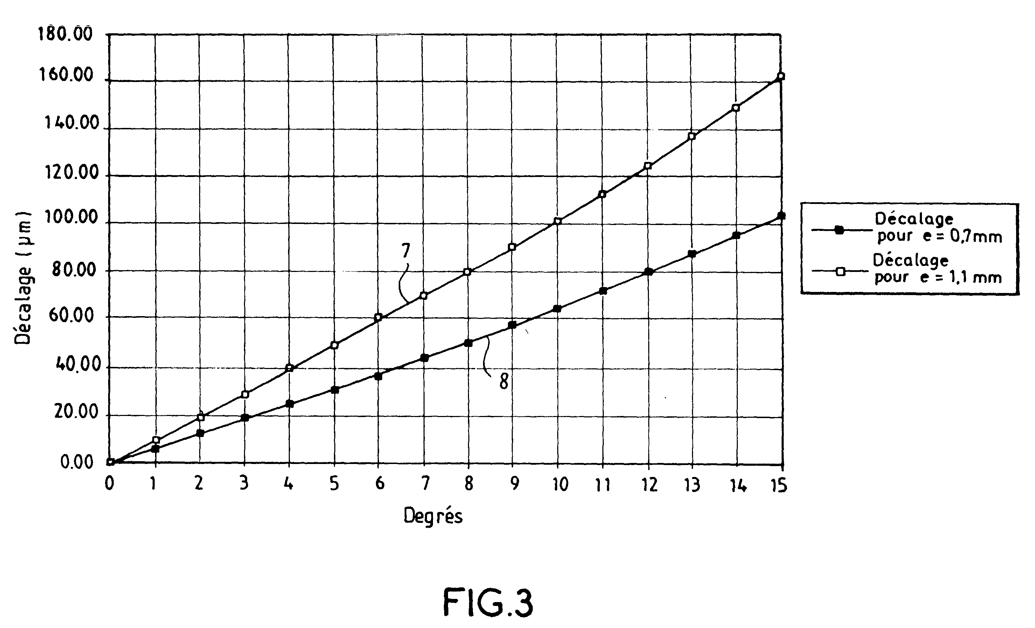

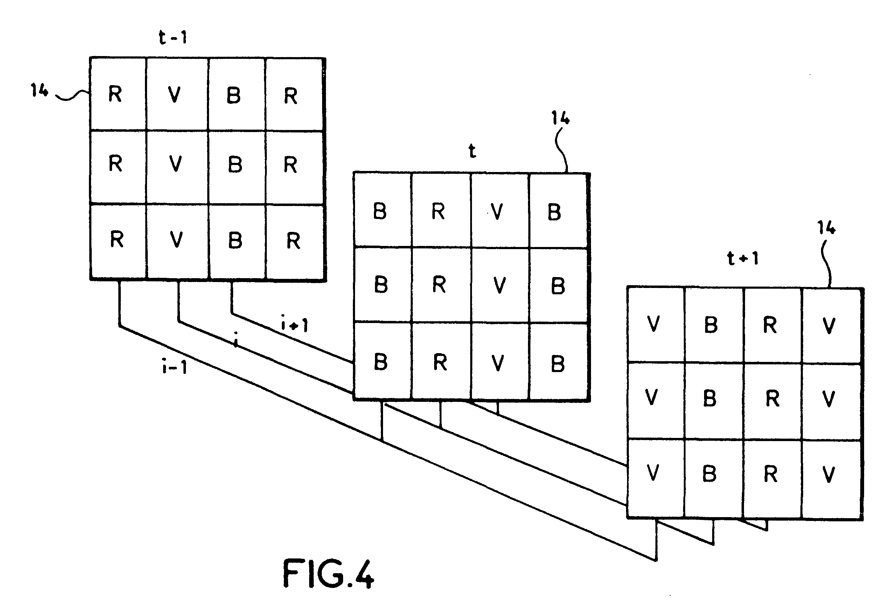

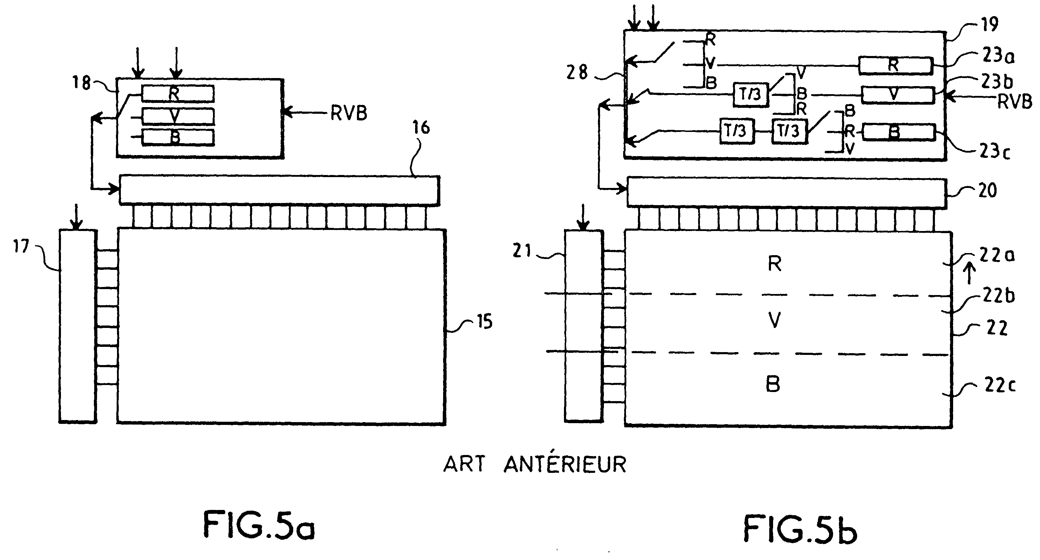

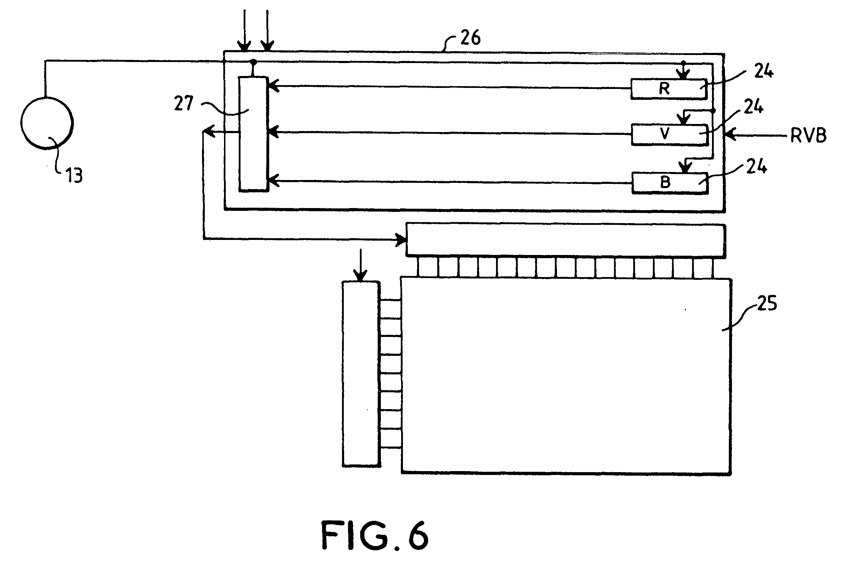

- . la figure 1 représente le principe de fonctionnement du système selon la présente invention,
- . la figure 2a représente un mode de réalisation préférentiel de la présente invention,
- . la figure 2b représente le chemin optique d'un rayon traversant une plaque de verre et illustre une des caractéristiques principales de l'invention,
- . la figure 3 représente les variations des déviations d'un faisceau en fonction des angles d'incidence sur la plaque pour deux valeurs de l'épaisseur de la plaque,
- . la figure 4 est une représentation du principe de séquencement des couleurs selon l'invention, dans le cas d'un arrangement des pixels colorés en lignes ("stripe" en langue Anglaise),
- . la figure 5a représente le mode d'adressage connu du sytème de la roue décrit plus haut,
- . la figure 5b représente le mode d'adressage connu du sytème du prisme décrit plus haut,
- . et la figure 6 illustre le mode d'adressage du système selon l'invention.

Sur la figure 1, la lumière issue du système d'illumination lampe-réflecteur (non représenté sur la figure) vient traverser la valve optique 1 qui peut être, par exemple, un écran à cristaux liquides et à matrice active. Cette valve 1 est constituée d'un ensemble de pixels i-1, i, i+1 et i+2 dont l'image doit être projetée via l'objectif 3 sur l'écran 4. Une caractéristique importante de l'invention est que l'image issue de la valve 1 traverse des plaques de verre 2 en rotation qui ont trois positions différentes inclinées par rapport à l'axe optique z du système.

En effet, à l'instant t, lorsque la plaque de verre 2 est parallèle à la valve 1 (φ=0), c'est à dire perpendiculaire à l'axe optique z, l'image du pixel i est affichée sur l'écran 4 de manière classique selon le chemin optique représenté en pointillés sur la figure. A l'instant t+1, la plaque de verre 2 est inclinée selon un angle φ particulier par rapport à la perpendiculaire à l'axe optique z, et l'image du pixel i issue de la valve 1 suit le chemin optique 5 parallèlement à l'axe optique z, puis est déviée dans la plaque 2. Elle est ensuite transmise parallèlement à l'axe optique z sur l'objectif de projection 3 pour être affichée de manière classique sur l'écran 4 à l'endroit où était affichée l'image du pixel i+1 à l'instant t, lorsque la plaque était perpendiculaire à l'axe optique z. L'inclinaison de la plaque 2 à l'instant t+1 est telle que l'image du pixel i a été décalée par rapport à sa position à l'instant t lorsque la plaque 2 était perpendiculaire à l'axe optique z, d'une distance d correspondant à la distance entre pixels colorés adjacents.

Ainsi, si à l'instant t-1 la plaque était inclinée d'un angle -φ, on comprend aisément que l'image du pixel i occupe successivement aux instants t-1, t et t+1, la place sur l'écran des images des pixels i-1, i et i+1 lorsque la plaque est parallèle à la valve optique. De cette manière, sur chaque point de l'écran de projection 4, les trois couleurs sont additionnées dans une trame d'image.

Sur la figure 2a, l'image de la valve 2 traverse un dispositif 9 comportant au moins trois plaques de verre 10, 11 et 12. Dans cet exemple particulier, la plaque 11 est parallèle à la valve optique 1 et les plaques 10 et 12 sont inclinées de part et d'autre de cette plaque 11 d'un même angle φ de manière à réaliser le décalage de l'image d'une distance d comme cela est expliqué à partir de la figure précédente. Cette distance d est donnée par la relation:

$$(1) \qquad d = e.Sin(\theta_2-\theta_1)/Cos(\theta_2),$$

e étant l'épaisseur de la plaque de verre, θ1 et θ2 étant respectivement les angles incidents air-plaque et plaque-air comme cela est représenté sur la figure 2b, illustration de la déviation d'un rayon au travers d'une plaque de verre.

Ces plaques de verre sont fixées à leurs bases à un moteur 13 dont l'axe est de préférence parallèle à l'axe optique z du système. La hauteur de ces plaques est égale ou proche de la hauteur de la valve. Il est possible de fixer plusieurs jeux de trois plaques de verre, cela permettant de réduire la fréquence de rotation de celui-ci. Par exemple, pour un dispositif utilisant trois plaques de verre, la fréquence du moteur peut être de 50 Hz, trois plaques couvrant un disque, chaque plaque occupant un angle de 120 degrés, et pour un dispositif utilisant neuf plaques, l'angle qu'occupe chaque plaque est de 40 degrés, elle peut être de 16,66 Hz. La fréquence du moteur, c'est à dire la fréquence de passage de chacune des plaques devant la valve, doit être synchrone avec la fréquence ligne et trame de la valve et du multiplexeur 27 du circuit d'adressage.

Après avoir traversé les plaques de verre, l'image est projetée au travers de l'objectif 14 sur l'écran de projection 4.

Les plaques de verre doivent traverser le faisceau de la valve 1 dans sa totalité. Pour cela, il faut adapter le rayon du bras du moteur au faisceau de la valve. Par exemple, pour une valve de 1,3" de diamètre, de format 4/3, on peut utiliser pour les plaques, un rayon supérieur à 70 mm.

La figure 3 montre les variations des déplacements d en fonction des angles incidents θ1 pour deux valeurs d'épaisseur de plaque e=0,7 mm (courbe 8) et e=1,1mm (courbe 7). On constate ainsi que pour un angle d'incidence θ1 de l'ordre de 8° et pour une épaisseur des plaques e de 0,7 mm, le déplacement d est d'environ 50 μm.

Le temps d'adressage du cristal liquide est non nul. La commutation optique des images des pixels se faisant instantanément, afin d'éviter une déssaturation de couleur, il est préférable d'avoir une zone noire horizontale de faible largeur sur chaque plaque de verre. Cette zone opaque située de préférence sur chaque plaque, obture une partie de la lumière et permet au cristal liquide de finir sa commutation, la perte en flux pouvant être faible si le temps de commutation l'est aussi.

Dans le cas d'un adressage couleur d'un écran à cristaux liquides par des circuits périphériques (drivers en langue Anglaise), le signal vidéo est séparé en trois couleurs rouge (R), vert (V) et bleu (B) par des circuits analogiques avant d'être affiché sur l'écran. Pour le multiplexage des trois couleurs dans le cas d'un système monovalve selon l'invention, la même opération est effectuée mais en divisant le temps d'adressage par trois.

D'autre part, la présente invention rend possible le séquencement des trois couleurs de manière à ce que, additionnées, celles-ci donnent du blanc. En effet, la figure 4 montre un même ensemble de pixels 14 à trois instants t-1, t et t+1. A chacun de ces instant, une image faite de pixels R, V et B correspondant à trois sous trames. On constate que, dans une trame, on peut obtenir une superposition de trois couleurs comme dans l'exemple de la figure 4 pour les pixels i-1 (R+V+B), i (B+R+V) et i+1 (V+B+R). La figure 4 représente une structure de pixels colorés arrangés en colonnes, mais il est bien évident que la présente invention s'applique aussi à tous les autres types de structures comme par exemple en lignes ou en delta.

La présente invention concerne aussi un procédé d'adressage du système décrit précédemment. La solution de la roue évoquée plus haut est adressée par le mode séquentiel illustré par la figure 5a. Chacunes des images R, V et B sont affichées alternativement à partir du circuit 18 sur l'écran 15 grâce aux circuits d'adressages périphériques ("drivers" en langue Anglaise) 16 et 17. La solution utilisant le prisme nécessite quant à elle un mode d'adressage illustré par la figure 5b très complexe. L'écran 22 est divisé en trois zones horizontales égales 22a, 22b et 22c, chaque zone étant adressée par un driver ligne 21 indépendant fonctionnant séquentiellement. Les signaux vidéo sont stockés dans des mémoires 23a, 23b et 23c indépendantes, un pointeur permet d'afficher chacune des couleurs R, V et B sur un tiers de l'écran grâce à un système de retard de T/3 et 2T/3, T étant la durée de la trame. Les données R, V et B sont multiplexées en 28 pour être affichées lignes par lignes grâce aux drivers 21 et 20.

Outre les avantages de l'invention déjà évoqués plus haut par rapport à ces solutions connues, le type d'adressage que celle-ci nécessite illustré par la figure 6 sont simples. On peut, par exemple, prévoir 3 mémoires R, V et B 24a, 23b et 23c avec chacune autant d'adresses qu'il y a de pixels sur l'écran 25. Le pointeur du bus d'adressage commun 26 est synchronisé avec le multiplexeur 27 et le moteur 13 de manière à ce que soit affichées des séries de sous-trames du type de celles de la figure 4, un pixel R, V ou B à t-1, devient respectivement B, R et V à t, et V, B et R à t+1. La phase du multiplexeur 27 est elle même synchrone avec la position des lames de verre sur l'écran.

Une autre solution encore plus simple pour l'adressage car n'utilisant pas de multiplexeur, peut être de connecter alternativement chacune des sorties des trois mémoires 24a, 24b et 24c à chaque coup d'horloge.

La présente invention peut être utilisée en particulier pour des appareil de vidéo à projection ou pour tout autre appareil nécessitant l'affichage d'images par projection sur un écran.

## Revendications

1. Système de projection couleur monovalve comportant un dispositif d'éclairement illuminant une valve optique couleur (1) commandée par un dispositif d'adressage et constituée de pixels (i-1,i,i + 1) dont l'image est affichée via un objectif (3 ;14) sur un écran de projection (4), comportant en plus, entre la valve optique (1) et l'objectif (3; 14) au moins un jeu de trois plaques de verre (2 ;10,11,12), caractérisé en ce que les plaques de verre sont positionnées les unes par rapport aux autres, de manière à décaler spatialement l'image dans le plan image sur l'écran de projection.

2. Système selon la revendication 1, caractérisé en ce que le ou les jeux de trois plaques (2 ;10,11,12) sont en rotation grâce à un moteur (13) autour d'un axe parallèle à l'axe optique (z) du système et coupent le faisceau image à chaque trame d'image.

3. Système de projection selon l'une quelconque des revendications précédentes, caractérisé en ce que les plaques (10,11,12) sont inclinées d'un angle donné (φ) les unes par rapport aux autres de manière à ce qu'une même image soit décalée sur l'écran de projection (4) d'une distance (d) égale à la distance entre les centres géographiques des pixels adjacents (i-1,i,i+1) de la valve optique (1).

4. Système de projection selon la revendication précédente, caractérisé en ce que l'une des plaques (2 ;11) d'un de ces jeux est parallèle à la valve optique (1), et que les deux autres (10,12) sont inclinées d'un même angle positif et négatif (+/-φ) par rapport à cette première plaque (11).

5. Système selon la revendication 4, caractérisé en ce que toutes les plaques (2 ;10,11,12) ont la même épaisseur e, et que, dans un même jeu, l'angle d'inclinaison des plaques (2,10,12) par rapport à celle qui est parallèle à la valve optique (1) est relié à cette épaisseur par la relation suivante :

$$d = e.Sin(\theta2-\theta1)/Cos(\theta2),$$

d étant la distance entre deux pixels adjacents, e étant l'épaisseur de la plaque de verre, θ1 et θ2 étant respectivement les angles incidents air-plaque et plaque-air des plaques (2 ;10,11,12).

6. Système selon l'une des revendications précédentes, caractérisé en ce qu'il comporte un seul jeu de plaques (10,11,12).

7. Système selon l'une des revendications 1 à 7, caractérisé en ce qu'il comporte trois jeux de plaques (10,11,12).

8. Système selon l'une des revendications précédentes, caractérisé en ce que toutes les plaques (2 ; 10,11,12) sont fixées à leurs bases à un moteur (13) dont l'axe est parallèle à l'axe optique (z) du système.

9. Système selon la revendication 8, caractérisé en ce que la fréquence du moteur est synchrone par rapport à la fréquence ligne et trame de la valve ainsi que par rapport au multiplexeur (27) du dispositif d'adressage.

10. Système selon les revendications 8 ou 9, caractérisé en ce que chaque plaque (2,10,11,12) comporte une zone opaque le long du rayon moteur (13).

11. Système selon l'une des revendications précédentes, caractérisé en ce que la valve optique est un écran à cristaux liquides.

12. Système selon la revendication 11, caractérisé en ce que la structure des pixels (14) de la valve optique (1) est une structure en delta.

13. Procédé d'adressage d'un système tel que défini par les revendications précédentes, caractérisé en ce qu'est prévue une mémoire (24a, 24b, 24c) pour chacune des trois couleurs rouge, verte et bleue, ayant autant d'adresses qu'il y a de pixels sur la valve (1 ;25), le pointeur d'un bus d'adressage commun (26) étant synchronisé avec un multiplexeur (27) de manière à ce que soit affichées des séries de sous-trames dans lesquelles un pixel, rouge, vert ou bleu à t-1, devient respectivement bleu, rouge et vert à t, et vert, bleu et rouge à t+1.

**14.** Procédé d'adressage d'un système tel que défini par les revendications 1 à 12, caractérisé en ce qu'est prévue une mémoire (24a, 24b, 24c) pour chacune des trois couleurs rouge, verte et bleue, ayant autant d'adresses qu'il y a de pixels sur la valve (1 ;25), chacune des sorties des trois mémoires (24a, 24b, 24c) étant passante alternativement à chaque coup d'horloge.

**Patentansprüche**

**1.** System zur Farbprojektion mit einem Monolichtventil mit einer Beleuchtungseinheit, die ein Farb-Lichtventil (1) beleuchtet, das durch eine Adressiereinheit gesteuert wird und aus Pixeln (i-1, i, i+1) besteht, deren Bild über ein Objektiv (3;14) auf einem Projektionsschirm (4) wiedergegeben wird, und mit wenigstens einem Satz von drei Glasplatten (2; 10,11,12) zwischen dem Lichtventil (1) und dem Objektiv (3;14)
dadurch gekennzeichnet, daß
die Glasplatten derart zueinander liegen, daß sie das Bild in der Bildebene auf dem Projektionsschirm räumlich verschieben.

**2.** System nach Anspruch 1, dadurch gekennzeichnet, daß der Satz oder die Sätze von drei Platten (2; 10,11,12) durch einen Motor (13) um eine Achse parallel zu der optischen Achse (z) des Systems in Drehung versetzt werden und den Bildstrahl bei jedem Bild schneiden.

**3.** System zur Projektion nach einem der vorangehenden Ansprüche, dadurch gekennzeichnet, daß die Platten (10,11,12) um einen bestimmten Winkel ($\phi$) derart gegeneinander geneigt sind, daß ein bestimmtes Bild auf dem Projektionsschirm (4) um einen Abstand (d) versetzt wird, der gleich dem Abstand zwischen den geographischen Mittelpunkten der angrenzenden Pixel (i-1,i,i+1) des Lichtventils (1) ist.

**4.** System zur Projektion nach dem vorangehendem Anspruch, dadurch gekennzeichnet, daß eine der Platten (2;11) in einem der Sätze parallel zu dem Lichtventil (1) verläuft und daß die beiden anderen (10,12) um denselben positiven oder negativen Winkel (+/-$\phi$) zu der ersten Platte (11) geneigt sind.

**5.** System nach Anspruch 4, dadurch gekennzeichnet, daß alle Platten (2;10,11,12) dieselbe Dicke e haben und daß in demselben Satz der Neigungswinkel der Platten (2,10,12) relativ zu der Platte parallel zu dem Lichtventil (1) mit dieser Dicke durch die folgende Gleichung verknüpft ist:

$$d = e.Sin(\theta-\theta1)/Cos(\theta2),$$

wobei d der Abstand zwischen zwei angrenzenden Pixeln, e die Dicke der Glasplatte, $\theta1$ und $\theta2$ jeweils die Einfallwinkel Luft/Platte und Platte/Luft der Platten (2;10,11,12) sind.

**6.** System nach einem der vorangehenden Ansprüche, dadurch gekennzeichnet, daß es einen einzigen Satz von Platten (10,11,12) enthält.

**7.** System nach einem der Ansprüche 1 bis 7, dadurch gekennzeichnet, daß es drei Sätze von Platten (10,11,12) enthält.

**8.** System nach einem der vorangehenden Ansprüche, dadurch gekennzeichnet, daß alle Platten (2; 10,11,12) mit ihren Grundflächen mit einem Motor (13) verbunden sind, dessen Achse parallel zu der optischen Achse (z) des Systems liegt.

**9.** System nach Anspruch 8, dadurch gekennzeichnet, daß die Frequenz des Motors synchron zu der Zeilenfrequenz und dem Lichtventilbild sowie zu dem Multiplexer (27) der Adressiereinheit ist.

**10.** System nach Anspruch 8 oder 9, dadurch gekennzeichnet, daß jede Platte (2,10,11,12) einen opaken Bereich entlang dem Motorradius (13) enthält.

**11.** System nach einem der vorangehenden Ansprüche, dadurch gekennzeichnet, daß das Lichtventil ein Flüssigkristallschirm ist.

**12.** System nach Anspruch 11, dadurch gekennzeichnet, daß der Aufbau der Pixel (14) des Lichtventils (1) eine Delta-Form hat.

**13.** Verfahren zur Adressierung eines Systems nach den vorangehenden Ansprüchen, dadurch gekennzeichnet, daß ein Speicher (24a,24b,24c) für jede der drei Farben Rot, Grün und Blau mit so vielen Adressen vorgesehen ist, wie es Pixel auf dem Lichtventil (1;25) gibt, der Zeiger eines gemeinsamen Adressierbus (26) derart mit einem Multiplexer (27) synchronisiert ist, daß eine Reihe von Unterbildern wiedergegeben wird, in denen bei t-1 wiedergegebene rote, grüne oder blaue Pixel bei t blaue, rote und grüne bzw. bei t+1 grüne, blaue und rote Pixel werden.

**14.** Verfahren zur Adressierung eines Systems nach den Ansprüchen 1 bis 12, dadurch gekennzeichnet, daß ein Speicher (24a,24b,24c) für jede der drei Farben Rot, Grün und Blau vorgesehen ist und so viele Adressen aufweist, wie es Pixel auf dem Lichtventil (1;25) gibt, und jeder der drei Ausgänge der drei Speicher (24a,24b,24c) nacheinander bei jedem Takt leitend ist.

## Claims

1. Monovalve colour projection system comprising an illumination device which illuminates a colour optical valve (1) controlled by an addressing device and consisting of pixels (i-1, i, i+1), the image of which is displayed via an objective (3; 14) on a projection screen (4), comprising, in addition, at least one set of three glass plates (2; 10, 11, 12) between the optical valve (1) and the objective (3; 14), characterized in that the glass plates are positioned with respect to one another so as to spatially shift the image in the image plane on the projection screen.

2. System according to Claim 1, characterized in that the set or sets of three plates (2; 10, 11, 12) are rotated by a motor (13) about an axis parallel to the optical axis (z) of the system and they cut the image beam at each image frame.

3. Projection system according to either of the preceding claims, characterized in that the plates (10, 11, 12) are inclined at a given angle ($\phi$) with respect to one another so that the same image is shifted on the projection screen (4) by a distance (d) equal to the distance between the geometrical centres of the adjacent pixels (i-1, i, i+1) of the optical valve (1).

4. Projection system according to the preceding claims, characterized in that one of the plates (2; 11) of one of these sets is parallel to the optical valve (1) and in that the other two plates (10, 12) are inclined at the same, but positive and negative, angle (+/--$\phi$) with respect to this first plate (11).

5. System according to Claim 4, characterized in that all the plates (2; 10, 11, 12) have the same thickness e and in that, within the same set, the angle of inclination of the plates (2, 10, 12) with respect to the plate which is parallel to the optical valve (1) is linked to this thickness through the following equation:

$$d = e.\sin(\theta2) - \theta1)/\cos(\theta2),$$

d being the distance between two adjacent pixels, e being the thickness of the glass plate and $\theta1$ and $\theta2$ being the air/plate and plate/air incident angles of the plates (2; 10, 11, 12), respectively.

6. System according to one of the preceding claims, characterized in that it comprises only a single set of plates (10, 11, 12).

7. System according to one of Claims 1 to 7, characterized in that it comprises three sets of plates (10, 11, 12).

8. System according to one of the preceding claims, characterized in that all the plates (2; 10, 11, 12) are fixed at their bases to a motor (13) whose shaft is parallel to the optical axis (z) of the system.

9. System according to Claim 8, characterized in that the frequency of the motor is synchronous with the line and frame frequency of the valve and with the multiplexer (27) of the addressing device.

10. System according to either of Claims 8 and 9, characterized in that each plate (2, 10, 11, 12) has an opaque region along the radius of the arm of the motor (13) radius.

11. System according to one of the preceding claims, characterized in that the optical valve is a liquid-crystal screen.

12. System according to Claim 11, characterized in that the structure of the pixels (14) of the optical valve (1) is a delta structure.

13. Method of addressing a system as defined by the preceding claims, characterized in that a memory (24a, 24b, 24c) is provided for each of the three colours - red, green and blue - having as many addresses as there are pixels on the valve (1; 25), the pointer of a common address bus (26) being synchronized with a multiplexer (27) so that series of subframes, in which a red, green or blue pixel at t-1 becomes blue, red and green at t and green, blue and red at t+1 respectively, is displayed.

14. Method of addressing a system as defined by Claims 1 to 12, characterized in that a memory (24a, 24b, 24c) is provided for each of the three colours - red, green and blue - having as many addresses as there are pixels on the valve (1; 25), each of the outputs of the three memories (24a, 24b, 24c) being passed to alternately at each clock pulse.

FIG.1

FIG.2a

FIG.2b

FIG.3

FIG.4

ART ANTÉRIEUR

FIG.5a

FIG.5b

EP 0 729 279 B1

FIG.6

EP 0 729 279 B1